# EUROPEAN PATENT APPLICATION

(11) **EP 3 284 727 A1**
(43) Date of publication of application: **21.02.2018**
(21) Application number: 17153850.7
(22) Date of filing: 30.01.2017
(51) Int. Cl.: C02F 9/00, C02F 1/22, C02F 1/24, C02F 1/72, C02F 101/32, C02F 103/10

(54) **METHOD FOR TREATING PRODUCED WATER**

(30) Priority: 16.08.2016 US 201615238266
(71) Applicant: Linde Aktiengesellschaft, 80331 München (DE)
(72) Inventor: ASLAM, Naveed, Houston, TX 77030 (US)
(74) Representative: Hofmann, Andreas

(57) **Abstract**

In order to overcome the limitations and problems that earlier methods have experienced, a method for treating produced water, in particular for treating 11.36 litres per minute to 49.21 litres per minute (three gallons per minute to thirteen gallons per minute) of produced water, is proposed, comprising the steps:
a) feeding the produced water to an, in particular intensified, compact separator (B) wherein suspended materials are removed from the produced water;
b) feeding the produced water to a separation system (C, F), in particular to a flotation device, wherein dissolved gases and suspended oils are separated from the produced water;
c) feeding the produced water to a crystallizer (D) wherein water and salt are separated from the produced water; and
d) recovering the water.

The produced water may be fed to a disinfection system and to a concentrator depending upon the composition of the produced water.

## Description

### Technical field of the present invention

The present invention relates to a method for treating produced water.

### Technological background of the present invention

Hydraulic fracturing is becoming a desirable method for extracting hydrocarbons. However, this method is being given scrutiny by public and regulatory agencies due to their extensive requirement for and consumption of water.

This problem is exacerbated, for example in certain regions of the United States, because there is a water shortage to contend with. For example the Permian Basin in Texas is one such area so there is a continuous need for methods that use water more efficiently in the hydraulic fracturing operations.

### Disclosure of the present invention: object, solution, advantages

Starting from the disadvantages and shortcomings as described above as well as taking the prior art as discussed into account, an object of the present invention is to overcome the limitations and problems that earlier methods have experienced.

This object is accomplished by a method comprising the features of claim 1. Advantageous embodiments, expedient improvements and other optional features of the present invention are set forth herein and disclosed in the respective dependent claims.

The present invention basically provides for a method for reclaiming produced water and utilizes a compact, modular and movable integrated system to reclaim produced water in fracturing operations. This method is able to reduce almost all the fresh water requirement during fraccing operations while also reducing the costs associated with produced water collection and disposal.

More particularly, a method for treating produced water from a fracking operation is disclosed. The produced water is first fed to a compact separator for the removal of suspended materials. This produced water is then treated for dissolved gases and suspended oils before being fed to a crystallizer where salts are separated from the produced water thereby producing fresh water for reuse or other means. Alternatively, the produced water may be fed to a disinfection system and a concentrator depending upon the composition of the produced water.

In a first embodiment of the present invention, there is disclosed a method for treating produced water comprising the steps:
- feeding the produced water to a compact separator wherein suspended materials are removed from the produced water;
- feeding the produced water to a separation system wherein dissolved gas and suspended oil are separated from the produced water;
- feeding the produced water to a crystallizer wherein water and salts are separated from the produced water; and
- recovering the water.

According to an advantageous embodiment of the present invention, the produced water may contain dissolved and dispersed oil.

In an expedient embodiment of the present invention, the produced water may contain about 150,000 parts per million (ppm) dissolved salts and/or dissolved solids.

According to a favoured embodiment of the present invention, the produced water may be recovered from a fracking operation.

In a preferred embodiment of the present invention, the compact separator may be an intensified compact separator.

According to an advantageous embodiment of the present invention, the compact separator may be a gravity separator.

In an expedient embodiment of the present invention, the gravity separator may contain submerged plates.

According to a favoured embodiment of the present invention, the submerged plates may be corrugated.

In a preferred embodiment of the present invention, oil droplets may be further removed from the produced water by the compact separator.

According to an advantageous embodiment of the present invention, the separation system may further remove dissolved gas from the produced water.

In an expedient embodiment of the present invention, the separation system may be a flotation device.

According to a favoured embodiment of the present invention, the suspended oils may be removed from the separation system by skimming.

In a preferred embodiment of the present invention, after having been fed to the separation system, the produced water may be fed to an, in particular oxygen-based, disinfection system wherein bacterial count of the produced water may be reduced.

According to an advantageous embodiment of the present invention, before being fed to the crystallizer, the produced water may be fed to a concentrator wherein the produced water may be concentrated.

In an expedient embodiment of the present invention, the concentrator may use liquefied nitrogen to concentrate the produced water.

According to a favoured embodiment of the present invention, the disinfection system may be oxygen-based.

In a preferred embodiment of the present invention, the concentrator may use liquefied nitrogen (LIN) to concentrate the produced water.

According to an advantageous embodiment of the present invention, water and salt may be separated in the crystallizer.

In an expedient embodiment of the present invention, the salt may be present in a brine solution.

According to a favoured embodiment of the present invention, the brine solution may be further crystallized thereby producing salt.

In a preferred embodiment of the present invention, fresh water may be produced in the crystallizer.

According to an advantageous embodiment of the present invention, the compact separator, the separation system and the crystallizer may be mounted on a skid, in particular on a movable compact skid.

In an expedient embodiment of the present invention, the skid may be mounted on a vehicle.

According to a favoured embodiment of the present invention, 11.36 litres per minute to 49.21 litres per minute (three gallons per minute to thirteen gallons per minute) of produced water may be treated.

In a second embodiment of the present invention, there is disclosed a method for treating produced water comprising the steps:
- feeding the produced water to a compact separator wherein suspended materials are removed from the produced water;
- feeding the produced water to a separation system wherein dissolved gas and suspended oil are separated from the produced water;
- feeding the produced water to a disinfection system wherein bacterial count of the produced water is reduced;
- feeding the produced water to a concentrator wherein the produced water is concentrated;
- feeding the produced water to a crystallizer wherein water and salts are separated from the produced water; and
- recovering the water.

According to an advantageous embodiment of the present invention, the produced water may contain dissolved and dispersed oil.

In an expedient embodiment of the present invention, the produced water may contain about 150,000 parts per million (ppm) dissolved salts and/or dissolved solids.

According to a favoured embodiment of the present invention, the produced water may be recovered from a fracking operation.

In a preferred embodiment of the present invention, the compact separator may be an intensified compact separator.

According to an advantageous embodiment of the present invention, the compact separator may be a gravity separator.

In an expedient embodiment of the present invention, the gravity separator may contain submerged plates.

According to a favoured embodiment of the present invention, the submerged plates may be corrugated.

In a preferred embodiment of the present invention, oil droplets may be further removed from the produced water by the compact separator.

According to an advantageous embodiment of the present invention, the separation system may further remove dissolved gas from the produced water.

In an expedient embodiment of the present invention, the separation system may be a flotation device.

According to a favoured embodiment of the present invention, the suspended oils may be removed from the separation system by skimming.

In a preferred embodiment of the present invention, the disinfection system may be oxygen-based.

According to an advantageous embodiment of the present invention, the concentrator may use liquefied nitrogen (LIN) to concentrate the produced water.

In an expedient embodiment of the present invention, water and salt may be separated in the crystallizer.

According to a favoured embodiment of the present invention, the salt may be present in a brine solution.

In a preferred embodiment of the present invention, the brine solution may be further crystallized thereby producing salt.

According to an advantageous embodiment of the present invention, fresh water may be produced in the crystallizer.

In an expedient embodiment of the present invention, the compact separator, the separation system and the crystallizer may be mounted on a skid, in particular on a movable compact skid.

According to a favoured embodiment of the present invention, the skid may be mounted on a vehicle.

In a preferred embodiment of the present invention, 11.36 litres per minute to 49.21 litres per minute (three gallons per minute to thirteen gallons per minute) of produced water may be treated.

The average produced water composition is described as follows, i.e. by average, maximum and minimum:

| constituent: | average: | maximum: | minimum: |
|---|---|---|---|
| COD (mg/l) | 3,000 | 7,900 | 300 |
| pH | 7 | 8 | 6 |
| TDS (mg/l) | 150,000 | 400,000 | 1,000 |
| TSS (mg/l) | 1,200 | 13,800 | 10 |
| O&G (mg/l) | 800 | 1,000 | 600 |
| iron (mg/l) | 100 | 300 | 3 |
| barium (mg/l) | 1,600 | 9,000 | 1 |
| strontium (mg/l) | 2,000 | 6,300 | 40 |
| sulfate (mg/l) | 1,200 | 15,000 | 10 |
| sodium (mg/l) | 36,000 | 150,000 | 3,300 |
| chlorine (mg/l) | 88,000 | 250,000 | 5,000 |
| bicarbonate (mg/l) | 1,800 | 15,000 | 80 |
| calcium (mg/l) | 10,200 | 74,000 | 300 |
| total organic carbon (mg/l) | 800 | 7,200 | 60 |

The produced water may be characterized by very high dissolved salts and/or dissolved solids. On average, these amounts of dissolved salts and/or of dissolved solids may be around 150,000 p[arts]p[er]m[illion]. With this amount of dissolved salts and/or of dissolved solids, produced water is typically beyond the capabilities of a traditional reverse osmosis (RO) unit, therefore produced water reclamation processes may be an evaporative crystallization process or a crystallization process.

It should be noted that for evaporative crystallization, the heat of evaporation of water (40.65 kJ/mol) is six times more than heat of fusion (6.01 kJ/mol), therefore, it is likely that a water reclamation process based on direct or in-direct crystallization could be economical.

The produced water stream comes out of a gas-water-solid separator so most of produced gases have already been removed from the produced water stream. However, there will be some dissolved gases like carbon dioxide which will be removed through aeration in this proposed process.

The produced water will be recovered from a fracking operation by conventional means. The produced water will typically contain dissolved and dispersed components of oil and dissolved formation minerals. The produced water will also contain production chemicals and dissolved gases as well as production solids and possibly biological life.

The produced water is fed to the, in particular intensified, compact separator. The compact separator will remove suspended materials that are present in the produced water.

The compact separator is designed to remove the suspended material from the produced water stream. Suspended solids and other suspended impurities would be removed from the produced water stream along with oil and sludge.

The compact separator typically will have tilted submerged plates in a gravity separator. These plates could be forty millimeters to fifty millimeters apart and set at an angle of thirty degrees to 45 degrees from horizontal. The desire is that the flow between the plates is laminar.

The oil and suspended matter removal efficiency of the plates is further enhanced by corrugating them which will cause the suspended particles and oil droplets to coalesce on the plates. In this design type, the solids will settle down towards the upper surface of the plates while the lower-density oils float up towards the underside of the plate immediately above.

The solids slowly migrate down the plate surface and will fall into a sludge hopper. The oil droplets rise into the top of the corrugations where they will coalesce with other droplets.

This will increase the droplet size and increase the rise rate once they break out into water above the plates, thereby ensuring that the oil floats to the surface of the separator. This oil can be collected at the surface and removed by a skimmer.

The produced water that now is relatively free of suspended materials is fed to the separation system wherein suspended oil and dissolved gases are removed from the produced water. The separation system utilizes a combination of nitrogen gas and novel geometry thereby creating a flow pattern which leads to high separation efficiencies of dissolved gas and suspended oil.

The separation system is typically a column flotation device that consists of a vertically oriented cylinder to remove dissolved gases, oil and other particulate matter from the produced water stream. In this unit, the produced water will enter the vessel near the top and flow downward while nitrogen bubbles are introduced at the bottom of the vessel through a nozzle and float upwards.

The produced water stream containing oil contaminants (dispersed oil droplets and/or oil-coated solids) is populated with gas bubbles that rise to the surface of the vessel. As the bubbles rise, they collide with and cling to the oil contaminants thereby dragging them to the surface of the vessel.

These floating oily contaminants can be skimmed off and removed from the vessel. The clean produced water exits the bottom of the vessel beneath the nitrogen gas entry point. Bubble formation and distribution can be achieved by using a specifically designed nozzle that uses the recycled cleaned produced water.

The produced water which is now free of suspended materials and suspended oil and dissolved gases is then fed to the crystallizer. The crystallizer is nitrogen based, namely liquid nitrogen so there is a source of liquid nitrogen in fluid communication with the crystallizer.

The produced water can be reclaimed through a direct or in-direct crystallizer. Both these types of crystallizers are operating through liquid nitrogen (LIN). In case of an in-direct crystallizer design the LIN is used to cool the cooling fluid such as silicone oil, this cooling fluid is in a closed loop and provides a cooling effect in a crystallizing chamber where water and salt are crystallized out in a chamber.

In order to operate this crystallizer for long periods of time it is fitted with a rotating scrapper which acts as a self-cleaning mechanism. The ice crystals/water slush is separated from heavier salt solution through buoyancy effects.

Another alternative could be a direct LIN based crystallizer. It is likely that LIN based crystallizer could be much more energy efficient unit then the in-direct self-cleaning device. The direct LIN based crystallizer will have no rotating component. LIN and gaseous nitrogen (GAN) will be used to create agitation and crystal separations. The direct LIN based design with a draft tube will ensure that lighter ice crystals are carried up while the heavier salt crystals settles down.

Both these crystallizer units utilizes the principles of eutectic freeze crystallization wherein the water and salt will be crystallized out. Essentially the water freezes through thermal contact with the liquefied nitrogen and as the water freezes it will reject the salt which will remain in a brine solution.

For both type of the crystallizers they are designed to be compact as well as self cleaning. Typically, these units will have two cooling zones, the first where water is crystallized out and water crystals will be separated.

The salt solution then enters the second cooling zone where the temperatures are even lower which results in the salts precipitating out thereby producing salt free water. The resulting fresh water can be recycled and reused in the fracking operation while the resulting salts can be sold or disposed of in an environmentally responsible manner.

In an alternative embodiment to the present invention, an oxygen-based disinfection unit and a concentrator are employed in fluid communication between the separation system which removes suspended oil and dissolved gases from the produced water and the crystallizer.

The oxygen-based disinfection unit will reduce the bacterial count of the produced water. This water is then fed to the optional concentration unit which will concentrate the produced water. This unit is in fluid communication with the source of liquefied nitrogen which feeds the crystallizer.

The concentrator uses the cold provided by the liquefied nitrogen to concentrate the produced water and will typically be employed where there is a lower amount of dissolved solids in the produced water. The produced water from the concentrator is then fed to the crystallizer but may also be fed back to the suspended oil and dissolved gases separation unit.

Oxygen will be reacted with a substrate to form the disinfecting agent which in turn will be immediately consumed thereby removing biological contaminations from the produced water.

The system is modular in design and can advantageously be permanently mounted at an oilfield site where it could treat produced water that is recovered from downhill oil fracking operations.

Alternatively, the system can be sized and mounted on an appropriate vehicle which would allow the produced water treating stem to be driven from fracking operation to fracking operation as needed by the operators of those operations. An appropriate skid and power source could be provided at each of these operations.

This method can typically process 11.36 litres per minute to 49.21 litres per minute (three gallons per minute to thirteen gallons per minute) of produced water feed stream. On average 26.50 litres per minute (seven G[allons]P[er]M[inute]) will be treated.

The produced water stream compared to a traditional waste water stream is not that high volume of flow, so a mobile, modular solution which can be deployed at each well site is a viable option.

This mobile modular system could therefore be mounted on a vehicle such as a trailer truck as a single skid. A semi flatbed may also be employed.

However, for a permanently mounted design a much larger capacity, for example 1,892.71 litres per minute to 5,678.12 litres per minute (500 G[allons]P[er]M[inute] to 1,500 G[allons]P[er]M[inute]) is desirable so that for example several wells in the area could be tied to central treatment facility.

Alternatively, flow back water could be treated by the methods of the present invention.

The various components of the crystallizer unit could be made from plastics or polymeric materials or ordinary steel coated with fluoro polymers. Since this is a low temperature design for water reclamation there is little likelihood of scaling and fouling effects and therefore the unit does not require more expensive material further lowering the overall capital expenditures (CapEx) for the unit.

Previous attempts at commercialization of indirect crystallizers to treat high total dissolved solids water were less successful due to the high capital expenditures (CapEx) and operating expenditures (OpEx) involved in the separation of ice and salt crystals as well as the cooling loop and refrigerant compressor design.

The present invention avoids these difficulties because the separation of ice and salt is performed in the same unit using the same fluid thereby lowering capital expenditures (CapEx) and operating expenditures (OpEx) by intensifying energy but also mass exchange in one unit.

Further the crystallizer of the present invention has a lower energy requirement compared to distillation or evaporative crystallizers as the latent heat of fusion of ice is only one seventh that of the latent heat of vaporization.

The lower operating temperatures further result in minimizing scaling and corrosion effects from the water present in the crystallizer chamber. This allows the operator to use lower cost materials of construction.

The high surface area by the direct contact between the produced water and liquid nitrogen results in a greater heat transfer coefficient.

The design per the present invention allows for no pretreatment of the produced water before being treated in the crystallizer.

The present invention further provides for the recovery of salts in near pure form allowing for their reuse or sale for use in other applications.

The present invention provides for a modular and movable crystallizer allowing for the unit to be moved to where there is a need to treat produced water.

The present invention further provides a high turn down ratio or TDR. This reflects the maximum capacity to minimum capacity in terms of flow so a unit with good TDR is desirable as when the feed flow changes the unit can adjust and still perform the desired work without upset the operability of the unit.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to particular and preferred embodiments by way of non-limiting example and to the appended drawing figures taken in conjunction with the following description of exemplary embodiments, of which:
- FIG. 1: is a schematic of the process for treating produced water according to the present invention; and
- FIG. 2: is a schematic of an alternative process for treating produced water according to the present invention.

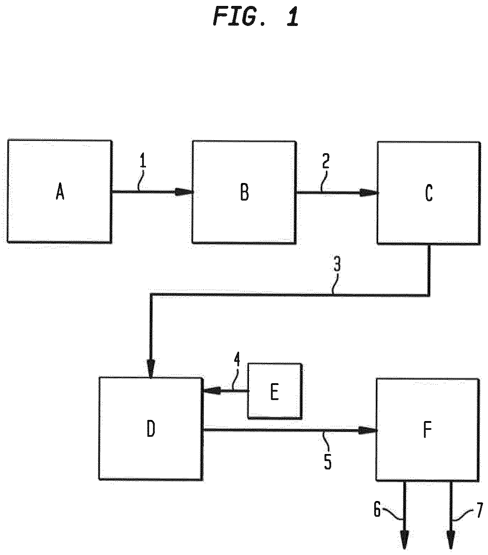

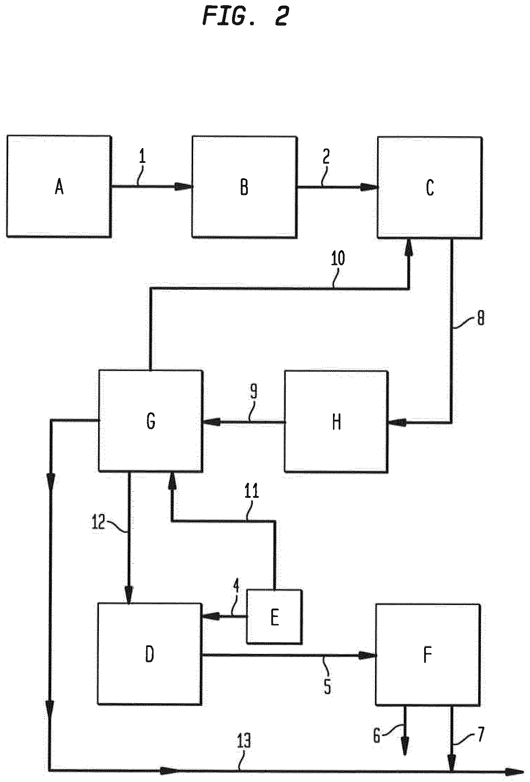

In the appended drawing figures, like equipment is labelled with the same reference signs throughout the description of FIG. 1 and FIG. 2.

### Detailed description of the drawings;

### best way of embodying the present invention

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

In the description above and below, terms such as horizontal, upright, vertical, above, below, beneath and the like, are used solely for the purpose of clarity illustrating the present invention and should not be taken as words of limitation. The drawings are for the purpose of illustrating the present invention and are not intended to be to scale.

FIG. 1 is a schematic of a first embodiment of the present invention.

Produced water from a fracking operation A is fed through line 1 to an intensified compact separator B. The intensified compact separator B will remove suspended materials from the produced water. The produced water now with the suspended materials removed is fed through line 2 to a nitrogen-based suspended oil and dissolved gases separation unit C.

The produced water which has suspended materials as well as suspended oil and dissolved gases removed from it is fed from the separation unit C through line 3 to the compact crystallizer D. The compact crystallizer D is in fluid communication with a source of liquefied nitrogen E through line 4.

The compact crystallizer D contains two cooling zones. The first zone is present in the compact crystallizer D where the produced water is separated into fresh water and a brine solution from the salt crystals that precipitate out of the produced water.

The fresh water and brine solution are fed through line 5 to the second cooling separation zone F which will separate the salt from the brine allowing for recovery of salts through line 6 and fresh water through line 7.

The fresh water thus recovered may be used in the fracking operation or may be used in other industrial processes. The salts may be recovered and sold or disposed of in an environmentally responsible manner.

FIG. 2 is a schematic of the process of FIG. 1 with additional unit operations present therein. Accordingly like unit operations and conveyance means will bear the same number and letter scheme as in FIG. 1.

In FIG. 2, additional unit operations of oxygen-based disinfection and concentrator are present in the schematic of FIG. 1. The produced water that exits the suspended oil and dissolved gases separation unit C is fed through line 8 to an oxygen-based disinfection unit H which will operate to remove the amount of bacteria present in the produced water.

The produced water with this lower bacterial count is fed through line 9 to a concentrator G. The concentrator G uses liquefied nitrogen and is in fluid communication with the source of liquefied nitrogen E that supplies the crystallizer D through line 4.

The concentrator G will be used to concentrate the produced water when the level of dissolved solids is lower than typical levels expected of produced water. The thus concentrated produced water is fed through line 12 to the crystallizer D.

Alternatively, the produced water from the concentrator G may be fed through line 10 to the suspended oils and dissolved gases unit C for further treatment. Depending upon the level of dissolved solids and their removal, the produced water may be purified sufficiently to be considered fresh water and this fresh water is fed from the concentrator G through line 13 where it will join with the purified water of line 7 from the separation unit F.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference signs

- 1: line or pipe or tube from fracking operation A to compact separator B
- 2: line or pipe or tube from compact separator B to separation unit C
- 3: line or pipe or tube from separation unit C to crystallizer D
- 4: line or pipe or tube from liquefied nitrogen (LIN) source E to crystallizer D
- 5: line or pipe or tube from crystallizer D to separation unit F
- 6: line or pipe or tube from separation unit F for recovery of salt
- 7: line or pipe or tube from separation unit F for recovery of fresh water
- 8: line or pipe or tube from separation unit C to disinfection unit H
- 9: line or pipe or tube from disinfection unit H to concentrator G
- 10: line or pipe or tube from concentrator G to separation unit C
- 11: line or pipe or tube from liquefied nitrogen (LIN) source E to concentrator G
- 12: line or pipe or tube from concentrator G to crystallizer D
- 13: line or pipe or tube from concentrator G for recovery of fresh water
- A: fracking operation
- B: compact separator, in particular intensified compact separator, for example gravity separator
- C: separation system or separation unit, in particular suspended oil and dissolved gases separation unit, for example nitrogen-based suspended oil and dissolved gases separation unit, such as flotation device
- D: crystallizer, in particular compact crystallizer
- E: liquefied nitrogen (LIN) source
- F: separation unit, in particular second cooling separation zone
- G: concentrator, in particular using liquefied nitrogen (LIN)
- H: disinfection system or disinfection unit, in particular oxygen-based disinfection unit

## Claims

1. A method for treating produced water, in particular 11.36 litres per minute to 49.21 litres per minute (three gallons per minute to thirteen gallons per minute) of produced water, comprising the steps of:
a) feeding the produced water to an, in particular intensified, compact separator (B) wherein suspended materials are removed from the produced water;
b) feeding the produced water to a separation system (C, F), in particular to a flotation device, wherein dissolved gases and suspended oils are separated from the produced water;
c) feeding the produced water to a crystallizer (D) wherein water and salt are separated from the produced water; and
d) recovering the water.

2. The method according to claim 1 wherein the produced water contains
- dissolved and dispersed oil, and/or
- about 150,000 parts per million dissolved salts and/or dissolved solids.

3. The method according to claim 1 or 2 wherein the produced water is recovered from a fracking operation (A).

4. The method according to at least one of claims 1 to 3 wherein the compact separator (B) is a gravity separator, in particular containing submerged, for example corrugated, plates.

5. The method according to at least one of claims 1 to 4 wherein oil droplets are further removed from the produced water by the compact separator (B).

6. The method according to at least one of claims 1 to 5 wherein the separation system (C, F) further removes dissolved gas from the produced water.

7. The method according to at least one of claims 1 to 6 wherein the suspended oils are removed from the separation system (C, F) by skimming.

8. The method according to at least one of claims 1 to 7 wherein, after having been fed to the separation system (C, F), the produced water is fed to an, in particular oxygen-based, disinfection system (H) wherein bacterial count of the produced water is reduced.

9. The method according to at least one of claims 1 to 8 wherein, before being fed to the crystallizer (D), the produced water is fed to a concentrator (G) wherein the produced water is concentrated.

10. The method according to claim 9 wherein the concentrator (G) uses liquefied nitrogen (LIN) to concentrate the produced water.

11. The method according to at least one of claims 1 to 10 wherein water and salt are separated in the crystallizer (D).

12. The method according to at least one of claims 1 to 11 wherein the salt is present in a brine solution.

13. The method according to claim 12 wherein the brine solution is further crystallized thereby producing salt.

14. The method according to at least one of claims 1 to 13 wherein fresh water is produced in the crystallizer (D).

15. The method according to at least one of claims 1 to 14 wherein the compact separator (B), the separation system (C, F) and the crystallizer (D) are mounted on a skid, in particular mounted on a vehicle.
